# EUROPEAN PATENT SPECIFICATION

(11) **EP 0 945 253 B1**
(45) Date of publication and mention of the grant of the patent: **12.10.2005**
(21) Application number: 98122446.2
(22) Date of filing: 26.11.1998
(51) Int. Cl.: B32B 17/04, B29C 70/02

(54) **Filled composite material**
Gefüllter Verbundwerkstoff
Matériau composite chargé

(30) Priority: 27.03.1998 US 79571 P; 25.08.1998 US 139474
(43) Date of publication of application: 29.09.1999
(73) Proprietor: Azdel, Inc., North Carolina 28150 (US)
(72) Inventor: Bassett, Walt H., Gastonia, North Carolina 28056 (US); Haque, Enamul, Gastonia, North Carolina 28056 (US)
(74) Representative: Schoppe, Fritz

(56) References cited:
- US-A- 4 469 543
- US-A- 5 643 989

## Description

### FIELD OF THE INVENTION

The present invention relates to improvement of physical and mechanical properties of composite materials, and more particularly to improving physical and mechanical properties of glass mat thermoplastic (GMT) composite materials using fillers.

### BACKGROUND OF THE INVENTION

Industry, governmental regulatory agencies and consumers demand durable and inexpensive products that minimally impact the natural environment. For example, one approach to meeting such demand is to develop and manufacture automobiles or aircraft with components made of light weight materials. Automobiles or aircraft having light weight components typically consume less energy than similar automobiles or aircraft having relatively heavier all-metal components. Consequently, automobiles or aircraft having light weight components generate less waste or by-product thereby minimizing their impact on the natural environment. However, the developers and manufacturers of the same products must bear in mind that such products are typically subject to a variety of applied forces (e.g., impact, bending, stretching, twisting, etc.) and require the incorporation of high strength materials to support such applied forces. In the past, steel or other high strength metals have been used in these products, but, generally, such metals are relatively heavy in weight. Automobiles or aircraft incorporating primarily heavy weight, metal based components negatively impact the natural environment because they are fuel inefficient.

Synthetic polymeric materials are frequently incorporated into products to replace other heavier materials, particularly heavy weight metals. When compared to high strength metals, synthetic polymeric materials have properties of relatively good strength yet weigh less than the high strength metals. Additionally, synthetic polymeric materials exhibit a resistance to corrosion or extreme temperatures which certain metals used in automobile and aircraft manufacturing lack. These properties make synthetic polymeric materials a desirable substitute for high strength metals in products subject to the previously described forces.

To address the continuing demand for light weight materials that provide durable and inexpensive products and minimally impact the natural environment, the composite industry seeks new methods and new polymeric materials that will maintain or increase the strength properties of a product while maintaining or decreasing the overall cost to produce the product. Thermoplastic resins, an emerging category of synthetic polymeric materials, are light weight and exhibit high tensile and impact strength. Polypropylene is an example of a popular thermoplastic resin being applied to different products because it is lightweight, yet stiff, resistant to chemicals and heat and able to withstand repeated flexing. Equally important, polypropylene is less expensive than many other thermoplastic resins. As manufacturers look to new materials, polypropylene remains a front runner in thermoplastic applications. Using polypropylene has helped reduce both the weight and the cost of an end-product while improving the recyclability of the end-product. Although polypropylene is known for its low cost and light weight, polypropylene by itself has lagged behind metal and other synthetic polymeric materials in terms of strength.

A common practice in the composite industry is to reinforce the synthetic polymeric material with fibers, for example, glass fiber. End-products prepared from such fiber reinforced materials take advantage of a high strength-to-weight ratio resulting from the combination of glass fiber with plastic. Glass fibers incorporated into polypropylene result in a polypropylene composite having improved strength. For example, U.S. Patent No. 5,643,989 discloses a fiber reinforced functionalized polyolefin composite. While reinforcement with glass fibers can dramatically increase the strength and stiffness of polypropylene, its use in certain areas is limited.

In the past, one area where reinforced polypropylene has not done as well as other plastics is in the area of automotive bumper beams. Traditionally, automotive bumpers have been made of metal, and until the low speed impact requirements were passed into law for the 1974 model year, most bumpers were made of metal. Once the new standards were passed, manufacturers started looking for ways to meet these new requirements. An attractive alternative proved to be bumpers made of plastic. These new bumpers offered good protection from damage as well as having reduced weight and improved corrosion resistance.

Automotive manufacturers sought improved bumper materials that are strong, light and can retain shape even when large units are molded. Thermoplastics in the polyolefin family are a favorite with molders, especially polypropylene. However, when molded into a large piece such as a bumper beam or a fascia, polypropylene is typically not sufficiently stiff to withstand a 5 mph impact from a vehicle. Polypropylene used for bumper beams may be reinforced with glass fibers to improve its performance and to meet impact requirements demanded by auto manufacturers, as disclosed by U.S. Patent No. 5,269,574 ("Pat. 574"). Pat. 574 discloses a light weight bumper beam capable of withstanding low speed impacts.

Despite glass fibers being an excellent source of reinforcement, a major drawback is attributed to the lack of interaction between the polar surfaces of the glass fibers with the non-polar polypropylene or other thermoplastic resins exhibiting non-polar surface characteristics. This lack of interaction produces a very weak fiber/polymer interface and results in separation of the fiber from the polymer which leads to surface imperfections and a weakened structure. To combat this problem, manufacturers have treated glass fibers, shortly after they are formed, with a composition, often called a size, which provides lubricating and protective properties to the fibers. The size, or sizing agent, protects the fibers from interfilament abrasion while increasing the interaction or adhesion of the fibers with the polymer. Consequently, the sizing agent, assists in providing strength to reinforced polymers and the products made therefrom.

A substantial amount of reinforcing glass mat is typically required to yield a thermoplastic sheet having industry-acceptable mechanical strength properties. For example, compressive stresses and translatory motion of the reinforced thermoplastic are encountered when stamping glass fiber mat reinforced thermoplastics. The stamping results in a flow of the entire filament bundle or strand of glass fiber. The flow of a bundle of glass fibers, or a section of glass mat, embedded in the thermoplastic resin, leads to surface imperfection such as roughness, waviness, ripples or corrugation on the final stamped product. Increasing the concentration of the reinforcing glass mat increases the likelihood of occurrence of such detrimental surface imperfections.

Researchers in the plastics industry have sought ways to further improve the properties of glass reinforced polymeric materials. Fillers are generally used in fairly high concentrations (e.g., greater than 5%) to either reinforce a plastic material or as an extender. A reinforcing filler should provide mechanical enhancement or thermal property improvement to the polymer matrix of the polymeric material. Extenders consist of a generally inexpensive filler added to polymeric materials to reduce the cost or to improve the processing of the polymeric materials.

Fillers are also used in conjunction with fiberglass in thermoset polymeric formulations. Sheet Molding Compound (SMC) and Fiber Reinforced Plastics (FRP) typically use high loadings of mineral fillers to improve shrinkage and Coefficient of Thermal Expansion (CTE) as well as to lower cost. In SMC and FRP using such thermoset polymers, there is some improvement of stiffness with little change in impact strength. This is due in part because of the inherently low impact characteristics associated with SMC or FRP materials and the reinforcing nature of the thermoset polymer.

However, the addition of fillers in thermoplastic materials, in contrast to thermoset polymeric formulations, typically results in a loss of impact strength in the resulting end product. Table 1 below illustrates this using polybutylene terephthalate (PBT) as an example.

**TABLE 1**

| **RESIN** | **UNITS** | **PBT** | **PBT** | **PBT** |
|---|---|---|---|---|
| **GLASS CONTENT** | % | 0 | 30 | 25 |
| **MINERAL CONTENT** | % | 0 | 0 | 20 |
| **IMPACT STRENGTH** | ft-lb./in.¹ | 1.0 | 2.0 | 1.8 |
| **TENSILE STRENGTH** | ksi ² | 8.7 | 19.5 | 14.8 |
| **TENSILE MODULUS** | ksi ² | 435 | 1450 | 1800 |
| **CTE** | ppm/°C | 75 | 20 | 2 |

| | | | | |
|---|---|---|---|---|
| ¹ l * ft-lb./in. = 53,74 N =53,74 dg*m/s² | | | | |
| ² l * ksi = 702,1 * kg/m² | | | | |

A balance between filler and glass content must be reached in order to minimize the effect of the addition of fillers on the strength characteristics of the end product.

A similar loss of impact strength from the addition of fillers has been observed for polypropylene (PP) based end products, as shown in Table 2 below.

**TABLE 2**

| **RESIN** | **UNITS** | **PP** | **PP** | **PP** | **PP** | **PP** |
|---|---|---|---|---|---|---|
| **GLASS CONTENT** | % | 0 | 0 | 0 | 0 | 30 |
| **MINERAL CONTENT** | % | 0 | 30% Talc | 30% CaCO₃ | 30% Mica | 0 |
| **IMPACT STRENGTH** | ft-lb./in.¹ | 1.1 | 1.1 | 0.9 | 0.7 | 2.2 |
| **TENSILE STRENGTH** | ksi ² | 5.5 | 5.0 | 4.0 | 5.5 | 13.0 |
| **TENSILE MODULUS** | ksi ² | 200 | 500 | 450 | 600 | 1000 |
| **CTE** | ppm/°C | 95 | 50 | 35 | 35 | 25 |

| | | | | | | |
|---|---|---|---|---|---|---|
| ¹ l * ft-lb./in. = 53,74 N =53,74 dg*m/s² | | | | | | |
| ² l * ksi = 702,1 * kg/m² | | | | | | |

What is needed is a GMT composite material having fillers incorporated therein having improved physical and mechanical properties over non-filled GMT composite materials. Further needed is a GMT composite material having a significantly reduced overall cost that provides an impact strength and a tensile strength similar to or greater than non-filled GMT composite materials. Further needed is a GMT composite material having fillers that can be used for automotive bumper beams.

### SUMMARY OF THE INVENTION

The present invention provides a GMT material having fillers incorporated therein having improved physical and mechanical properties over similar non-filled GMT composite materials. Further, the invention provides a GMT composite material having a significantly reduced overall cost that provides an impact strength and a tensile strength similar to or greater than non-filled GMT composite materials. Further, the invention provides a GMT composite material having fillers that can be used for automotive bumper beams. Further, the invention provides a GMT composite having higher rib strength than non-mineral filled GMT materials. Further, the invention provides a GMT composite having greater long term heat aging (LTHA) properties than non-mineral filled GMT materials.

The GMT composite material has in its basic form a polyolefin, glass fibers and a filler. The preferred composite includes a polyolefin, a glass fiber mat of chopped glass fibers of at least 12.7 mm (a half inch) in length and a filler, preferably a talc, mica, calcium carbonate or barium sulphate filler. The composite material of the present invention may be produced in a single mat resin sheet or a laminated product and can be used for formed parts, such as an automotive bumper beam, an interior dash or a truck bedliner.

The polyolefin is preferably selected from polypropylenes, polyethylenes, polymethylpentenes, and copolymer blends thereof. The polyolefin may also include from amorphous polyolefins, essentially crystalline polyolefins (e.g., atactic, isotactic or syntactic), acid-modified polyolefins (e.g., maleic anhydride), homopolymers or copolymer blends thereof. The glass fibers are greater than about 1/4 inch (6.4 mm) in length and are preferably at least about 1/2 inch (12.7 mm) in length. The glass fibers may be a continuous glass mat, such as unidirectional or random mats and woven or non-woven mats, or chopped fibers, as previously mentioned. The glass fiber content in the filled composite material is from about 10% to about 70% and is preferably from about 10% to about 60%. In an alternative embodiment, sized fibers prepared with known sizing agents prior to incorporation into the composite material are used.

The filler may be a mineral filler and is preferably selected from the group consisting of fiber glass, kaolin, mica, wollastonite, calcium carbonate, talc, ppt calcium carbonate, wood flour, fly ash, MoS₂, ferrite, iron oxide, hollow spheres , aluminum trihydrate (ATH), Mg(OH)₂, TiO₂, ZnO, barytes, satin white, iron oxide, metallic powder, oxides, chromates, cadmium, fumed silica, glass spheres and basic lead silicate. The filler has a particle size from about 2 microns to about 500 microns and is from about 5% to about 50% by weight of the filled composite material.

### OBJECTS OF THE INVENTION

The principal object of the present invention is to provide a filled composite material having a significantly reduced overall cost while providing an impact strength and a tensile strength similar to or greater than non-filled composite materials.

Another object of the present invention is to provide a filled composite material having a continuous random glass mat that has an impact and a tensile strength equal to or greater than similar non-filled composite materials.

Another object of the present invention is to provide a filled composite material having chopped glass fibers that has an impact and a tensile strength equal to or greater than similar non-filled composite materials.

Another object of the present invention is to provide a filled composite material having glass fiber reinforcement that is thermo-moldable and stampable.

Another, more particular, object of the present invention is to provide a GMT composite having higher rib strength than non-mineral filled GMT materials.

Another, more particular, object of the present invention is to provide a GMT composite having greater long term heat aging (LTHA) properties than non-mineral filled GMT materials.

Another, more particular, object of the present invention is to provide a filled composite material having chopped glass fibers that minimizes shrinkage and warpage of a product formed from the filled composite material and that has an impact and a tensile strength equal to or greater than similar non-filled composite materials.

Another object of the present invention is to provide a low cost, glass mat thermoplastic composite material having enhanced mechanical properties.

Another, more particular, object of the present invention is to provide a filled glass mat thermoplastic composite material that can be used for bumper beams in automobiles.

### DETAILED DESCRIPTION

While polypropylene is mentioned extensively throughout this application, the filled composite material of the present invention is not intended to be limited to polypropylene resins but may also include derivatives of polypropylene as well as polyethylene and other thermoplastic resinous materials. Further, derivatives of polyethylene, can be used and can have functionalization added to the polyethylene to prepare a composite material having superior performance characteristics.

The present invention relates to improvement of mechanical properties of thermo-moldable and stampable polyolefin composites, particularly glass mat thermoplastic (GMT) materials. The invention provides a filled composite material having in its basic form a polyolefin, glass fibers and a filler. The preferred filled composite material includes a polyolefin, a glass fiber mat or chopped glass fibers of at least 6.4 mm (a quarter inch) in length and a filler, preferably a talc, mica, calcium carbonate or barium sulphate filler.

Suitable thermoplastic resinous materials which may be utilized in making the composite material of the present invention include polyolefins such as polypropylene, polyethylene, polymethylpentene, and copolymer blends thereof. The polyolefins may be amorphous polyolefins, essentially crystalline polyolefins (e.g., atactic, isotactic or syntactic), acid-modified polyolefins (e.g., maleic anhydride), homopolymers or copolymer blends thereof.

Glass fibers which serve to reinforce thermoplastic matrices of the invention have ranges of length from about 1/4 inch 6.4 mm) to infinite length, i.e., a continuous glass mat, and are preferably at least 1/2 inch (12.7 mm) in length. Glass mats are prepared with glass fibers having a uniform fiber size (e.g., K or T) in accordance with known practice. The terms "K" and "T" used in reference to fiber glass are designations of fiber diameter, and the fibers have a diameter of thirteen and twenty-three microns, respectively. Such mats, especially continuous strand needled mats, are particularly useful for making reinforced thermoplastic polyolefin resin sheets of the present invention and may be unidirectional or random mats and woven or non-woven mats. The glass fiber content in the filled composite material is from about 10% to about 70% and is preferably from about 25% to about 50%. Sized fibers may be used and prepared in accordance with known sizing methods prior to incorporation into the composite material. Conventional silane-based sizing compositions may be applied to the glass fibers.

The addition of fillers to fiber reinforced composite materials traditionally reduces both the shrinkage and warpage of chopped fiber products. For example, polypropylene is a low surface energy material, having a polar component of surface tension that is about zero. This lack of polar functionality in polypropylene has been attributed to be the main reason for its inertness, poor adhesion, poor wettability and poor solvent resistance. Talc is a high surface energy material with a high polar component. By introducing talc or other mineral fillers, the surface energy of the polypropylene is improved, and the shrinkage and warpage of chopped fiber products incorporating polypropylene are minimized. In particular, the polar component of the invented composite materials described herein is increased.

Appropriate fillers used in the composite material of the invention originate from mineral sources. Additionally, various chemical composition classes of fillers are appropriate for use in the present invention, such as carbonate (natural or synthetic), silica (natural or synthetic), silicate, sulfate, oxides, chromates, cadmium, carbon and organic pigments. Mineral fillers can be selected from the group comprising kaolin, mica, calcium carbonate, talc, TiO₂, fumed & ppt silica and ppt calcium carbonate. Kaolin is a common name for clay or aluminum silicate.

Fiber glass, mica, wollastonite and kaolin can be used as a reinforcement in the composite materials. Wollastonite is a common name for calcium silicate in a crystalline, fiber form. Calcium carbonate can be used for cost reduction of the composite materials. MoS₂ can be used as a lubricant. Ferrite and iron oxide can be used to impart magnetic characteristics. Hollow spheres can be used for reducing weight. Aluminum trihydrate ("ATH") and Mg(OH)₂ can be used for adding flame retardant characteristics. TiO₂, ZnO, kaolin, barytes and satin white can be used as a whitening filler. Iron oxide can be used as a blackening filler. Metallic powder can be used to provide electrical conductivity. Kaolin and talc can be used to provide electrical resistance. TiO₂ and ZnO can be used to provide opacity. Oxides, chromates and cadmium can be used to provide color. Fumed silica and glass spheres can be used as a rheological agent. Basic lead silicate can be used to combat corrosion. In a preferred embodiment of the present invention, the filler is selected from the group of talc, mica, calcium carbonate and barium sulphate filler.

The particle size of the fillers used in the present invention have a diameter range from about 2 microns to about 500 microns, and preferably from about 5 microns to about 200 microns. The filler content in the filled composite material is from about 5% to about 50% and is preferably from about 20% to about 40% by weight of the composite material. Sizing agents can also be used with the fillers, for example, as an aid in binding the filler with the composite material. A single mat sheet can be formed from the filled composite material having varying thickness. The foregoing components can be blended in accordance with known practice, such as dry and wet blending methods.

The incorporation of the fillers into the composite material of the present invention unexpectedly resulted in a maintenance or improvement in the impact strength and tensile strength of the composite material. For example, samples of polypropylene-based composite materials having fillers incorporated therein, described in further detail hereinbelow, surprisingly exhibited equal or better impact strengths and tensile strengths than non-filled polypropylene-based composite materials.

The present invention shows significant improvement in DYNATUP instrumental impact tests and maintenance or improvement in tensile strength tests. The term "DYNATUP" is a trade name for an instrument that can perform impact tests. Non-filled random GMT composites having from about 30% to about 40% glass fiber content have a DYNATUP instrumental impact strength from about 2,07 kgm (15) to about 2,21 kgm (16 foot pounds), whereas non-filled chopped fiber GMT composites having from about 32% to about 40% glass fiber content exhibit a DYNATUP impact strength from about 1,80 kgm (13) to about 1,94kgm (14 foot pounds). Unexpectedly, through the addition of fillers in polyolefin composites, such as polypropylene or polyethylene, a filled composite material exhibits a DYNATUP strength equal to or greater than the non-filled GMT composites. Filled random GMT composites made in accordance with the present invention having a glass fiber content from about 30% to about 40% exhibit a DYNATUP impact strength in a range from about 2,21 kgm (16) to about 2,77 kgm (20 foot pounds). Filled chopped fiber GMT composites made in accordance with the present invention having a glass fiber content from about 26% to about 33% exhibited a DYNATUP impact strength of about 15 to about 18 foot pounds.

The filled GMT composites described herein have mechanical properties similar to or significantly improved over non-filled GMT composites. The use of fillers in substantial quantities by percent weight allows for synthetic polymeric materials to be produced at a lower cost while maintaining or improving the mechanical properties of the composite materials.

### ALTERNATIVE EMBODIMENTS

After a filled polyolefin composite product is produced, it may be pre-cut into sheets called blanks. These blanks are preheated to a temperature just above their softening point. This is typically done with infra-red heaters in a holding apparatus which is connected to a modified mechanical stamping press. Softened blanks are then charged to an open, cooled matched metal die mounted in the press. The die is then rapidly closed and the press is stopped on the bottom for 5 to 15 seconds to allow for cooling of the sheet. The press is then opened and a formed part is removed. Relatively complex isotropic parts requiring no trimming can be shaped at very high production rates in one die. This compares favorably with steel stampings which would generally require several "strikes" in multiple dies and presses to stamp a comparable sheet.

The filled polyolefin composite product described herein is ideally used for automotive bumper beams and other formed parts including but not limited to vehicle panels, interior dashes and truck bedliners. In particular, the filled polyolefin composite product described herein is ideally suited for use in the bumper beam of Pat. 574, as previously described. For example, a GMT composite material having a polyolefin, glass fibers having a glass fiber length of at least about 1/4 inch (6.4 mm) and a filler, is shaped using a compression molding process. The filled GMT composite material is preheated and transferred to a compression molding tool where the bumper is formed. The bumper beam formed from the filled GMT composite material is an I-beam having a front wall, a rear wall, a cross member connecting the front and rear walls and at least one reinforcing rib running from the front to the rear walls of the I-beam. The ribs can be arranged in any pattern or orientation which provides support to the front wall and, preferably, placed in a cross pattern with the axis of the ribs perpendicularly positioned with respect to the cross member. The I-beam may also comprise a covering member to shield the interior portion of the I-beam and provide styling to the bumper beam. Alternatively, the bumper beam formed from the filled GMT composite material is a C-shaped or closed section beam.

### EXAMPLES

Material samples 1 through 9 were prepared in accordance with standard ASTM (American Society for Testing Materials) and ISO (International Standard Organization) procedures using polypropylene resin. The material samples included samples 1 and 2, continuous random GMT composites, serving as controls for comparison against samples 3 and 4, talc-filled continuous random GMT composites and sample 5, a barium sulfate filled continuous random GMT composite. When tested for tensile strength, flexural strength, rib strength, compressive strength and impact, sample 5 showed improvements in all areas (see Table 3) but compressive strength. What was completely unexpected was the maintenance or significant increase in performance of the filled continuous random fiber samples (i.e., sample 3, sample 4 and sample 5) when tested for tensile strength, rib strength and impact. The impact tests were run on a Dynatup machine and showed about a 7% to 35% increase in performance of samples 1 and 2 which did not include fillers.

**TABLE 3**

| **PROPERTIES** | **1** | **2** | **3** | **4** | **5** |
|---|---|---|---|---|---|
| **Tensile Strength (KSI)**² | 12.0 | 14.5 | 12.2 | 14.4 | 13.9 |
| **Tensile Modulus (KSI)**² | 700 | 900 | 859 | 1041 | 1163 |
| **Tensile Elongation (%)** | 2.2 | 2.0 | 2.1 | 1.9 | 1.8 |
| **Flexural Strength (KSI)**² | 20.0 | 23.0 | 19.7 | 16.9 | 21.2 |
| **Flexural Modulus (KSI)**² | 740 | 887 | 829 | 816 | 954 |
| **Rib Strength (KSI)**² | 10.0 | 16.0 | 10.9 | 17.7 | 23.7 |
| **Compressive Strength (KSI)**² | 14.0 | 20.0 | 11.4 | 9.6 | 12.5 |
| **Izod Impact (Ft-Lbs/in.)**¹ | 11.5 | 14.0 | 14.8 | 19.4 | 17.3 |
| **Dynatup Impact (Ft.-Lbs)**³ | 15.0 | 16.0 | 16 | 18.5 | 20.2 |
| **Specific Gravity** | 1.12 | 1.21 | 1.48 | 1.49 | 1.57 |
| **Glass Content (%) (Theoretical)** | 30.0 | 40.0 | 30.0 | 40.0 | 28.2 |
| **Filler Content (%) (Burnout)** | 0.0 | 0.0 | 29.3 | 19.9 | 32.7 |
| **Mat Weight (Oz.)**⁴ | 2.1 | 2.95 | 2.1 | 2.95 | 2.1 |
| **Filler Type** | NONE | NONE | TALC | TALC | BaSO₄ |
| **Filler Concentration In Resin (%)** | 0.0 | 0.0 | 40.0 | 40.0 | 40.0 |
| **Comments** | STD. RANDOM MAT FORMUL. (30%) | STD. RANDOM MAT FORMUL. (40%) | FILLED RANDOM MAT FORMUL. (30%) | FILLED RANDOM MAT FORMUL. (40%) | FILLED RANDOM MAT FORMUL. (30%) |

| | | | | | |
|---|---|---|---|---|---|
| ¹ 1 * Ft-lb./in. = 53,74 N =53,74 kg*m/s² | | | | | |
| ² 1* KSI = 703,1 * kg/m² | | | | | |
| ³ 1* Ft.-Lbs = 1,356 Nm = 0,1383kgm | | | | | |
| ⁴ 1 * OZ. = 28.35 g (gram) | | | | | |

Additionally, material samples were prepared including samples 6 and 7, chopped fiber GMT composites, serving as control for comparison against samples 8 and 9, talc-filled chopped fiber GMT composites. When tested for tensile strength, flexural strength, rib strength, compressive strength and impact, sample 9 showed improvements in all areas (see Table 4) but compressive strength. What was completely unexpected was the maintenance or significant increase in performance of the filled chopped fiber composite, sample 9, when tested for tensile strength, rib strength and impact. Sample 8 demonstrates significant improvement in Dynatup impact strength, about a 40% increase, and tensile strength, about a 23% increase, over sample 6, which does not include filler but has greater glass fiber content. Additionally, sample 9, which includes about the same concentration of filler but also has greater glass fiber content demonstrates significant improvement in Dynatup impact strength, about a 18% increase, and tensile strength about a 47% increase over sample 6.

**Table 4**

| **PROPERTIES** | **6** | **7** | **8** | **9** |
|---|---|---|---|---|
| **Tensile Strength (KSI)**² | 12.0 | 15.0 | 14.8 | 17.6 |
| **Tensile Modulus (KSI)**² | 675 | 844 | 710 | 849 |
| **Tensile Elongation (%)** | 2.4 | 2.2 | 2.8 | 2.5 |
| **Flexural Strength (KSI)**² | 17.0 | 21.3 | 18.3 | 23.2 |
| **Flexural Modulus (KSI)**² | 640 | 797 | 745 | 890 |
| **Rib Strength (KSI)**² | 13.9 | 23.4 | 18.6 | 28.1 |
| **Compressive Strength (KSI)**² | 13.0 | 17.0 | 15.2 | 17.6 |
| **Izod Impact (Ft- Lbs/In.)**¹ | 10.5 | 8.3 | 9.4 | 7.3 |
| **Dynatup Impact (Ft.-Lbs)**³ | 13.0 | 14.1 | 18.2 | 15.3 |
| **Specific Gravity** | 1.14 | 1.21 | 1.23 | 1.34 |
| **Glass Content (%) (Theoretical)** | 32.0 | 40 | 26.1 | 33 |
| **Filler Content (%) (Burnout)** | 0.0 | 0.0 | 15.2 | 17.1 |
| **Mat Weight (Oz.)**⁴ | 2.1CF | 3.0CF | 2.1CF | 3.0 CF |
| **Filler Type** | NONE | NONE | TALC | TALC |
| **Filler Concentration In Resin (%)** | 0.0 | 0.0 | 20.0 | 20.0 |
| **Comments** | STD. CHOPPED FIBER FORMUL. (32%) | STD. CHOPPED FIBER FORMUL. (40%) | FILLED CHOPPED FIBER FORMUL. (26.1%) | FILLED CHOPPED FIBER FORMUL. (33%) |

| | | | | |
|---|---|---|---|---|
| ¹ 1 * Ft-lb./in. = 53,74 N =53,74 kg*m/s² | | | | |
| ² 1* KSI = 703,1 * kg/m² | | | | |
| ³ 1* Ft.-Lbs = 1,356 Nm = 0,1383kgm | | | | |
| ⁴ 1 * OZ. = 28.35 g (gram) | | | | |

### SUMMARY OF THE ACHIEVEMENT OF THE OBJECTS OF THE INVENTION

From the foregoing, it is readily apparent that I have invented a filled composite material having a significantly reduced overall cost while providing an impact strength and a tensile strength similar to or greater than non-filled composite materials. The present invention provides a filled composite material having a continuous random glass mat that has an impact and a tensile strength equal to or greater than similar non-filled composite materials. The present invention provides a filled composite material having chopped glass fibers that has an impact and a tensile strength equal to or greater than similar non-filled composite materials. The present invention provides a filled composite material having glass fiber reinforcement that is thermo-moldable and stampable. The present invention provides a GMT composite having higher rib strength than non-mineral filled GMT materials. The present invention provides a GMT composite having greater long term heat aging (LTHA) properties than non-mineral filled GMT materials. The present invention provides a filled composite material having chopped glass fibers that minimizes shrinkage and warpage of a product formed from the filled composite material and that has an impact and a tensile strength equal to or greater than similar non-filled composite materials. The present invention provides a low cost, glass mat thermoplastic composite material having enhanced mechanical properties. The present invention provides a filled glass mat thermoplastic composite material that can be used for bumper beams in automobiles.

It is to be understood that the foregoing description and specific embodiments are merely illustrative of the best mode of the invention and the principles thereof, and that various modifications and additions may be made to the apparatus by those skilled in the art, without departing from the scope of this invention, which is therefore understood to be limited only by the scope of the appended claims.

## Claims

1. A filled glass mat thermoplastic (GMT) composite material comprising:
a polyolefin;
glass fibers having a glass fiber length of at least about 6,4 mm (1/4 inch); and
a mineral filler.

2. A filled GMT composite material according to claim 1 wherein said polyolefin is selected from the group consisting of polypropylene, polyethylene and polymethylpentene, or wherein said polyolefin is a cristalline polyolefin selected from the group consisting of atactic polyolefins, isotactic polyolefins and syntactic polyolefins.

3. A filled GMT composite material according to claim 1 wherein said glass fibers are chopped glass fibers having a length greater than about 12,7 mm (1/2 inch).

4. A filled GMT composite material according to claim 1 wherein said glass fibers are a continuous unidirectional glass mat, or wherein said glass fibers are a continuous random glass mat.

5. A filled GMT composite material according to claim 1 wherein said glass fibers are from 10% to 60% by weight of the composite material.

6. A filled GMT composite material according to claim 1 wherein said filler is selected from the group consisting of mineral fillers, wherein said filler is selected from the group consisting of fiber glass, kaolin, mica, wollastonite, calcium carbonate, talc, ppt calcium carbonate, barium sulphate, MoS₂, ferrite, iron oxide, hollow spheres, aluminum trihydrate (ATH), Mg(OH)₂, TiO₂, ZnO, barytes, satin white, iron oxide, metallic powder, oxides, chromates, cadmium, fumed silica, glass spheres and basic lead silicate.

7. A filled GMT composite material according to claim 1 wherein said filler has a particle size from 2 microns to 500 microns.

8. A filled GMT composite material according to claim 1 further comprising a sizing agent.

9. A filled GMT composite material according to claim 1 wherein said filler is from 5% to 50% by weight of the filled GMT composite material.

10. A filled single mat resin sheet that is thermo-moldable and stampable comprising:
a polyolefin;
a glass fiber mat having glass fibers treated with a sizing agent; and
a mineral filler.

11. A filled single mat resin sheet according to claim 10 wherein said polyolefin is selected from the group consisting of polypropylene, polyethylene and polymethylpentene, or wherein said polyolefin is a cristalline polyolefin selected from the group consisting of atactic polyolefins, isotactic polyolefins and syntactic polyolefins.

12. A filled single mat resin sheet according to claim 10 wherein said filler is selected from the group consisting of mineral fillers, wherein said filler is selected from the group consisting of fiber glass, kaolin, wollastonite, ppt calcium carbonate, MoS₂, ferrite, iron oxide, hollow spheres, aluminum trihydrate (ATH), Mg(OH)₂, TiO₂, Zno, barytes, satin white, iron oxide, metallic powder, oxides, chromates, cadmium, fumed silica, glass spheres and basic lead silicate.

13. A filled single mat resin sheet according to claim 10 wherein said glass fiber mat is selected from the group consisting of woven glass fiber mat and non-woven glass fiber mat.

14. A filled single mat resin sheet according to claim 10 wherein said filler has a particle size from 2 microns to 500 microns.

15. A filled single mat resin sheet according to claim 10 wherein said glass fiber mat is a continuous unidirectional glass mat, or wherein said glass fiber mat is a continuous random glass mat.

16. A filled single mat resin sheet according to claim 10 wherein the filler content is from 15% to 50% by weight of the composite material.

17. A bumper beam molded from a filled GMT composite material according to claims 1 to 9, the bumper beam comprising:
a polyolefin;
glass fibers having a glass fiber length of at least about 6,4 mm (1/4 inch); and
a mineral filler.

## Patentansprüche

1. Ein gefülltes thermoplastisches Glasmatten- (GMT-) Verbundmaterial mit folgenden Merkmalen:
einem Polyolefin;
Glasfasern, die eine Glasfaserlänge von zumindest etwa 6,4 mm (1/4 Zoll) aufweisen; und
einem Mineralfüllstoff.

2. Ein gefülltes GMT-Verbundmaterial gemäß Anspruch 1, bei dem das Polyolefin aus der Gruppe ausgewählt ist, die aus Polypropylen, Polyethylen und Polymethylpenten besteht, oder bei dem das Polyolefin ein Kristallin-Polyolefin ist, das aus der Gruppe ausgewählt ist, die aus ataktischen Polyolefinen, isotaktischen Polyolefinen und syntaktischen Polyolefinen besteht.

3. Ein gefülltes GMT-Verbundmaterial gemäß Anspruch 1, bei dem die Glasfasern zerhackte Glasfasern sind, die eine Länge aufweisen, die größer als etwa 12,7 mm (1/2 Zoll) ist.

4. Ein gefülltes GMT-Verbundmaterial gemäß Anspruch 1, bei dem die Glasfasern eine durchgehende unidirektionale Glasmatte sind oder bei dem die Glasfasern eine durchgehende zufällige Glasmatte sind.

5. Ein gefülltes GMT-Verbundmaterial gemäß Anspruch 1, bei dem die Glasfasern von 10 bis 60 Gewichtsprozent des Verbundmaterials sind.

6. Ein gefülltes GMT-Verbundmaterial gemäß Anspruch 1, bei dem der Füllstoff aus der Gruppe ausgewählt ist, die aus Mineralfüllstoffen besteht, wobei der Füllstoff aus der Gruppe ausgewählt ist, die aus Fiberglas, Kaolin, Mica, Wollastonit, Kalziumkarbonat, ausgefälltem Kalziumkarbonat, Bariumsulfat, MoS₂, Ferrit, Eisenoxid, Hohlkugeln, Aluminiumtrihydrat (ATH), Mg(OH)₂, TiO₂, ZnO, Baryten, Satinweiß, Eisenoxid, Metallpulver, Oxiden, Chromaten, Cadmium, geräuchertem Siliziumdioxid, Glaskugeln und basischem Bleisilikat besteht.

7. Ein gefülltes GMT-Verbundmaterial gemäß Anspruch 1, bei dem der Füllstoff eine Teilchengröße von 2 µm bis 500 µm aufweist.

8. Ein gefülltes GMT-Verbundmaterial gemäß Anspruch 1, das ferner ein Leimmittel aufweist.

9. Ein gefülltes GMT-Verbundmaterial gemäß Anspruch 1, bei dem der Füllstoff von 5 bis 50 Gewichtsprozent des gefüllten GMT-Verbundmaterials ist.

10. Eine gefüllte Einzelmattenharzlage, die thermoformbar und prägbar ist, mit folgenden Merkmalen:
einem Polyolefin;
einer Glasfasermatte, die Glasfasern aufweist, die mit einem Leimmittel behandelt sind; und
einem Mineralfüllstoff.

11. Eine gefüllte Einzelmattenharzlage gemäß Anspruch 10, bei der das Polyolefin aus der Gruppe ausgewählt ist, die aus Polypropylen, Polyethylen und Polymethylpenten besteht, oder bei der das Polyolefin ein Kristallin-Polyolefin ist, das aus der Gruppe ausgewählt ist, die aus ataktischen Polyolefinen, isotaktischen Polyolefinen und syntaktischen Polyolefinen besteht.

12. Eine gefüllte Einzelmattenharzlage gemäß Anspruch 10, bei der der Füllstoff aus der Gruppe ausgewählt ist, die aus Mineralfüllstoffen besteht, wobei der Füllstoff aus der Gruppe ausgewählt ist, die aus Fiberglas, Kaolin, Wollastonit, ausgefälltem Kalziumkarbonat, MoS₂, Ferrit, Eisenoxid, Hohlkugeln, Aluminiumtrihydrat (ATH), Mg(OH)₂, TiO₂, ZnO, Baryten, Satinweiß, Eisenoxid, Metallpulver, Oxiden, Chromaten, Cadmium, geräuchertem Siliziumdioxid, Glaskugeln und basischem Bleisilikat besteht.

13. Eine gefüllte Einzelmattenharzlage gemäß Anspruch 10, bei der die Glasfasermatte aus der Gruppe ausgewählt ist, die aus einer gewebten Glasfasermatte und einer nichtgewebten Glasfasermatte besteht.

14. Eine gefüllte Einzelmattenharzlage gemäß Anspruch 10, bei der der Füllstoff eine Teilchengröße von 2 µm bis 500 µm aufweist.

15. Eine gefüllte Einzelmattenharzlage gemäß Anspruch 10, bei der die Glasfasermatte eine durchgehende unidirektionale Glasmatte ist oder bei der die Glasfasermatte eine durchgehende zufällige Glasmatte ist.

16. Eine gefüllte Einzelmattenharzlage gemäß Anspruch 10, bei der der Füllstoffgehalt von 15 bis 50 % des Verbundmaterials beträgt.

17. Ein Stoßfängerbalken, der aus einem gefüllten GMT-Verbundmaterial gemäß einem der Ansprüche 1 bis 9 geformt ist, wobei der Stoßfängerbalken folgende Merkmale aufweist:
ein Polyolefin;
Glasfasern, die eine Glasfaserlänge von zumindest etwa 6,4 mm (1/4 Zoll) aufweisen; und
einen Mineralfüllstoff.

## Revendications

1. Un matériau composite feutre de verre - matière thermoplastique (GMT) chargé, comprenant :
une polyoléfine ;
des fibres de verre ayant une longueur de fibre de verre d'au moins environ 6,4 mm (1/4 pouce) ; et
une charge minérale.

2. Un matériau composite GMT chargé, selon la revendication 1, dans lequel ladite polyoléfine est choisie dans le groupe se composant de polypropylène, polyéthylène et polyméthylpentène, ou dans lequel ladite polyoléfine est une polyoléfine cristalline choisie dans le groupe se composant des polyoléfines atactiques, polyoléfines isotactiques et polyoléfines syntactiques.

3. Un matériau composite GMT chargé, selon la revendication 1, dans lequel lesdites fibres de verre sont des fibres de verre hachées ayant une longueur supérieure à environ 12,7 mm (1/2 pouce).

4. Un matériau composite GMT chargé, selon la revendication 1, dans lequel lesdites fibres de verre sont constituées par un feutre de verre unidirectionnel continu, ou dans lequel lesdites fibres de verre sont constituées par un feutre de verre aléatoire continu.

5. Un matériau composite GMT chargé, selon la revendication 1, dans lequel lesdites fibres de verre sont de 10% à 60% en poids du matériau composite.

6. Un matériau composite GMT chargé, selon la revendication 1, dans lequel ladite charge est choisie dans le groupe se composant de charges minérales, où ladite charge est choisie dans le groupe se composant de fibre de verre, kaolin, mica, wollastonite, carbonate de calcium, talc, carbonate de calcium ppt, sulfate de baryum, MoS₂, ferrite, oxyde de fer, sphères creuses, aluminium trihydraté (ATH), Mg(OH)₂, TiO₂, ZnO, barytes, blanc satiné, oxyde de fer, poudre métallique, oxydes, chromates, cadmium, silice fumée, sphères de verre et silicate basique de plomb.

7. Un matériau composite GMT chargé, selon la revendication 1, dans lequel ladite charge a une granulométrie de 2 microns à 500 microns.

8. Un matériau composite GMT chargé, selon la revendication 1, comprenant en outre un agent de calibrage.

9. Un matériau composite GMT chargé selon la revendication 1, dans lequel ladite charge est de 5% à 50% en poids du matériau composite GMT chargé.

10. Une feuille de résine à feutre unique chargée qui est thermo-moulable et estampable comprenant :
une polyoléfine ;
un feutre de fibre de verre comprenant des fibres de verre traitées avec un agent de calibrage ; et
une charge minérale.

11. Une feuille de résine à feutre unique chargée, selon la revendication 10, dans laquelle ladite polyoléfine est choisie dans le groupe se composant de polypropylène, polyéthylène et polyméthylpentène, ou dans laquelle ladite polyoléfine est une polyoléfine cristalline choisie dans le groupe se composant des polyoléfines atactiques, polyoléfines isotactiques et polyoléfines syntactiques.

12. Une feuille de résine à feutre unique chargée, selon la revendication 10, dans laquelle ladite charge est choisie dans le groupe se composant de fibres minérales, où ladite charge est choisie dans le groupe se composant de fibre de verre, kaolin, wollastonite, carbonate de calcium ppt, MoS₂, ferrite, oxyde de fer, sphères creuses, aluminium trihydraté (ATH), Mg(OH)₂, TiO₂, ZnO, barytes, blanc satiné, oxyde de fer, poudre métallique, oxydes, chromates, cadmium, silice fumée, sphères de verre et silicate basique de plomb.

13. Une feuille de résine à feutre unique chargée, selon la revendication 10, dans laquelle ledit feutre de fibre de verre est choisi dans le groupe se composant d'un feutre de fibre de verre tissée et d'un feutre de fibre de verre non tissée.

14. Une feuille de résine à feutre unique chargée, selon la revendication 10, dans laquelle ladite charge a une granulométrie de 2 microns à 500 microns.

15. Une feuille de résine à feutre unique chargée, selon la revendication 10, dans laquelle ledit feutre de fibre de verre est un feutre de verre unidirectionnel continu, ou dans lequel ledit feutre de fibre de verre est un feutre de verre aléatoire continu.

16. Une feuille de résine à feutre unique chargée, selon la revendication 10, dans laquelle la teneur de la charge est de 15% à 50% en poids du matériau composite.

17. Un tampon amortisseur moulé à partir d'un matériau composite GMT chargé, selon les revendications 1 à 9, le tampon amortisseur comprenant :
une polyoléfine ;
des fibres de verre ayant une longueur de fibre de verre d'au moins environ 6,4 mm (1/4 pouce) ; et
une charge minérale.
